Europäisches Patentamt

European Patent Office

Office européen des brevets

(19)

(11) **EP 1 458 145 A1**

(12) **EUROPEAN PATENT APPLICATION**
published in accordance with Art. 158(3) EPC

(43) Date of publication:
**15.09.2004 Bulletin 2004/38**

(21) Application number: **02781770.9**

(22) Date of filing: **15.11.2002**

(51) Int Cl.⁷: **H04L 12/56**, G10L 19/00,
H04L 1/00

(86) International application number:
**PCT/JP2002/011905**

(87) International publication number:
**WO 2003/043277 (22.05.2003 Gazette 2003/21)**

(84) Designated Contracting States:
**AT BE BG CH CY CZ DE DK EE ES FI FR GB GR
IE IT LI LU MC NL PT SE SK TR**

(30) Priority: **15.11.2001 JP 2001349967**

(71) Applicant: **MATSUSHITA ELECTRIC INDUSTRIAL
CO., LTD.
Kadoma-shi, Osaka 571-8501 (JP)**

(72) Inventors:
• **SATO, Masaki
Urayasu-shi, Chiba 279-0001 (JP)**

• **CHIA, Pei Yen
760865 Singapore (SG)**
• **TAN, Pek Yew
760128 Singapore (SG)**

(74) Representative: **Eisenführ, Speiser & Partner
Patentanwälte Rechtsanwälte
Postfach 10 60 78
28060 Bremen (DE)**

(54) **ERROR CONCEALMENT APPARATUS AND METHOD**

(57) This invention provides a method and apparatus for dynamically selecting and applying different error concealment techniques at run-time on the receiver side. A plurality of error concealment algorithms is stored and dynamically selected for error concealment. A selection signal determines which algorithm is selected. The selection signal is based on parameters denoting computer processing capacity and audio signal characteristics.

*Fig.1*

## Description

FIELD OF TECHNOLOGY

The present invention relates to an error concealment method and to an apparatus for selecting an error concealment method for concealing errors in real-time streaming signals received in a packet network where dropped packets are a cause of problems on the receiver side.

2. Description of Related Art

Much research has been directed to error concealment technologies for audio data. These methods can generally be classified as methods for receiver-side reconstruction of dropped packets, sender-side reconstruction of dropped packets, and methods for reconstructing dropped packets on the sender and receiver sides. See, for example, references [1] to [4] below.

[1] O.J. Wasem, D.J. Goodman, C.A. Dvorak and H.G. Page, The Effect of Waveform Substitution on the Quality of PCM Packet Communications. IEEE Transactions on Acoustics, Speech and Signal Processing, Vol.36, No 3, March 1986.
[2] Colin Perkins, Orion Hodson and Vicky Hardman, A Survey of Packet Loss Recovery Techniques for Streaming Audio, IEEE Network, September/October 1998.
[3] R.A Valenzuela and C.N.A Nimalu, A new Voice Packet Reconstruction Technique.
[4] V.Hardman, A.Sasse, M.Handley and A.Watson, Reliable Audio for Use over Internet, Proc INET'95.
[5] 3GPP TS 26.094 V4.0.0 (2001-03).
[6] Petr Pollak, Pavel Sovka and Jam Uhlir, Cepstral Speech/Pause Detectors.
[7] Werner Verhelst and March Roelands, An Overlap Technique based on Waveform Similarity (WSOLA) for High Quality Time-Scale Modification of Speech, 1993 IEEE.

Reconstructing dropped packets on the receiver side is easier than reconstructing dropped'packets on the sender side, but is only effective when the frequency of packet loss is low and the packet size is small.

Furthermore, reconstructing dropped packets on the sender side requires adding redundancy to the transmission packets, that is, adding additional information to the data packets, thus requiring additional bandwidth or a longer end-to-end delay. See references [1] and [2] above.

Adding a large amount of extra information is required in methods for reconstructing dropped packets on the sender side. As described in references [4] and [7] above, adding additional information includes adding a sequence number to each packet, adding a resend request when a packet is dropped, or adding a low bitrate encoding request for resent packets, and in any case is complicated.

Methods for reconstructing dropped packets on the sender and receiver sides seek to gain the benefits of both receiver-side reconstruction and sender-side reconstruction, but the error concealment technique is static and cannot be changed at run-time.

SUMMARY OF THE INVENTION

An object of the present invention is therefore to enable the receiver to dynamically select the best error concealment method at run-time.

Intervals where packets are dropped must be filled with the most appropriate substitution possible. In a voice packet network this fill data could be silence or data reconstructed based on a best-guess estimate or environmental factors. Because different error concealment techniques are more effective with different loss patterns, inserting a dynamic selector before error concealment is applied to evaluate the loss pattern and other environmental factors yields better results.

Furthermore, based on the loss error pattern and such current conditions as the network and resource level, the present invention enables the receiver to select the most appropriate method and thereby maximize use of known error concealment methods.

The present invention also provide selection criteria for determining the error concealment technique used. The IP protocol currently used on the Internet is a connectionless, best-effort protocol that does not provide any quality of service guarantee. Although the best error concealment method can be used to handle burst loss in real-time streaming applications, applying the method of the present invention when congestion occurs or the receiving device suffers a sudden drop in available resources makes it possible to switch dynamically during run-time to a less resource-intensive computation method.

The present invention also provides an apparatus for concealing errors using different methods for packet disassembly.

Yet further, this invention also provides a method that uses the characteristics of the loss pattern to decide which error concealment technique to apply. If a voice signal is detected before packet loss in a voice-over-IP (VOIP) application, a signal that is reconstructed from information in neighboring signals will be used. If a non-voice signal is detected before packet loss, then either low power noise segments or silence is used.

To solve these problems, an error concealment apparatus according to the present invention uses current resource level information and dropped packet information. An error concealment apparatus according to the present invention has a voice signal detector for detecting segments of good signals, whether the signals are voice or non-voice signals. A voice signal detector of this type is taught in references [5] and [6], for example.

The error concealment method applied to voice signals is selected from a set of usable error concealment algorithms. The selection standards are the current activity level of the receiver and the level of resources currently available at the receiver. If the available resources are low, an error concealment method that consumes virtually no CPU resources is used. A specific threshold level is assigned to each algorithm based on the complexity of the algorithm.

Another set of algorithms each having a threshold level set according to each algorithm is also provided for non-voice signals.

The invention also has a selector module for selecting the best technique for concealing errors in a packet network. This selector module uses the results passed from other modules such as the voice detection module. The voice detection module searches template data for voice segments and non-voice segments. The template data is the data packet from a preceding packet. The set of error concealment methods is used for processing voice segments and non-voice segments. The selector also determines whether to use a simpler algorithm with resources are low with considering for the existing environmental conditions. Two methods are used for analysis in order for the error concealment method to work efficiently, specifically, short-term analysis and long-term analysis. Short-term analysis is done based on error loss in the audio packets buffered by the selector module. Long-term analysis is done based on knowledge of packet loss sent to the receiver, and statistics collected by the receiver or reliable network nodes.

A first selection apparatus according to the present invention selects the error concealment method that is best for concealing lost packets in digital audio signal distributed over a packet switching network so that the receiver can decode the digital audio signals in real time. This apparatus comprises a packet audio buffer used for packet buffering, a loss pattern detector used to determine the pattern of dropped packets that should have been received within a defined time frame, an audio signal analyzer for extracting the temporal characteristics of a digitized audio signal, and an error concealment selector for selecting the ultimately best error concealment algorithm based on the results returned by the packet audio buffer, loss pattern detector, and audio signal analyzer.

Preferably, the selection apparatus measures the packet size denoting the length (byte count or bit count, for example) of the digital signal encapsulated by the data packet; the number of consecutive loss packets used to encapsulate in a unit time digital signals of a fixed length or variable length, and the packet interval representing the digital signals measured in the time between two dropped packets; or the actual signals corresponding thereto (bit count or other).

Furthermore, the loss pattern detector reports generating error packets in the audio or voice stream using a format composed of the packet size, number of consecutive dropped packets, and the packet interval, or effectively corresponding signals.

A first method according to the present invention is a method for determining characteristics of dropped packets in the packet audio buffer and loss pattern detector. This method has steps of: buffering the previous good packets that encapsulate a fixed or variable length of digitized signals in unit time; buffering the next good packets that encapsulate a fixed or variable length of digitized signals in unit time; determining the number of successive loss packets that encapsulate a fixed or variable length of digitized signals in unit time; determining the pattern of the previous good packets that encapsulate a fixed or variable length of digitized signals in unit time; and determining the pattern of the subsequent good packets that encapsulate a fixed or variable length of digitized signals in unit time.

A second method of the invention provides a description of the error loss pattern by providing numerical values for the digital signal loss computed or measured over an arbitrary period of time by generating statistics in unit time or other representation of the specified period of time where the statistic comprises one of the following: the maximum interval between digital signals with error or digital signals with loss (referred to below as "digital signals with error or loss") where the interval between loss is defined as a measure of distance in terms of time or packet unit between two instances of digital signal loss, or burst loss is defined as loss of consecutive digital signals in a unit time or other specified time period (including variable); the mean interval between erroneous or dropped digital signals; the last interval period between digital signals with error or loss measured from the first instance of the last batch of consecutive units of non-erroneous digital signals to the end of the specified period for error pattern description; the first interval between digital signals with error or loss measured from the beginning of the specified period for error pattern description to the beginning of the first instance of digital signals with error; the maximum burst interval of digital signals with error or loss, where burst loss is defined as continuous loss of digital signals in unit time or other specified period; mean burst of digital signals with error or loss; last burst period of digital signals with error or loss measured from the last batch of consecutive units of digital signals with error to the end of the specified period for error pattern description; and first burst period of digital signals with error or loss measured from the beginning of the specified period for error pattern description to the beginning of the first instance of a digital signal without error.

A third error concealment method according to the present invention is a method for selecting an error concealment algorithm. This method comprises steps of: determining the current computational resources for error concealment; comparing the current resources against the different error concealment algorithms based on the error concealment calculation time and resource consumption; determining the digitized signal characteristics encapsulated in the previous good packet; determining the error pattern of digitized signals received over a predetermined time frame; and selecting the error concealment algorithm based on input collected from the maximum interval, mean interval, last interval, first interval, maximum burst error or dropped digital signal, mean burst error or dropped digital signal, last burst interval, and the first burst interval.

A fourth error concealment method according to the present invention enabling he receiver to determine the error concealment algorithm before receiving a data packet encapsulating a digital audio signal. This method comprises steps of receiving packet loss rate feedback reports from sets of active receivers of data packets encapsulating digitized signals; generating packet loss statistics based on the format for reporting and measuring the occurrence of error packets based the pattern description method; and transmitting the statistics to receivers that have or are about to receive the digitized signal stream delivered in a sequence of data packets.

A fifth error concealment method is a method enabling the selector to dynamically select different error concealment methods for burst loss. This method comprises a step for switching the error concealment method from a first method to' a second method when the mean sampling amplitude is less than a threshold T; a step for switching muting so that by reducing the amplitude of consecutive error-concealed error packets, the audio or voice amplitude in playback packets is gradually reduced and finally muted; and a merging step for applying packet merging between multiple packets at the beginning and end of burst loss in order to provide a smooth transition from a good packet to a concealed packet or from a concealed packet to a good packet.

This switching step preferably includes steps of: initializing a table comprising a list of threshold values; mapping each threshold value to an error concealment algorithm; computing the threshold T value based on error loss pattern and environmental conditions; comparing said computed threshold value T with the values in the initialized list of threshold values; and selecting the algorithm that is closest to the computed T value.

Further preferably, the muting switching step comprises steps of: setting silence threshold ST; multiplying each sample signal within the packet with a constant C having a value less than 1; computing the average power P for said sampling signal; comparing average power P with silence threshold ST; and switching to a mute mode when average power P falls below threshold ST.

Further preferably, the merging switching step comprises steps of: defining a template window W1 comprising n sample signals; multiplying the n samples of concealed signals at the burst boundaries with samples in said template window W1; normalizing the product signals; and substituting the normalized signals for error-concealed packet segments.

A sixth method according to the present invention is a method for merging boundaries at the beginning and end of burst loss when the n samples of error-concealed signals at the boundary are silence. This method comprises steps of: defining a template window W2 comprising n sample signals; normalizing n signals in template window W2 to the n signals at the boundary segment of a good packet; and substituting the normalized samples for the segment of concealed packets at the boundaries.

A packet receiver according to the present invention comprises a packet receiving means for receiving data packets from a network, detecting packet loss in the received data packets, and outputting the detection result; the above-described selection means for selecting the best error concealment method for the dropped data packets and applying error concealment processing based on the detection result from the packet receiving means; and a conversion means for converting the error-concealed digital signal output from the selection means to an analog signal.

Preferably, the packet receiving means of this packet receiver adds a packet header containing an error indicator field containing an error indicator flag and a sequence number field containing a consecutive sequence number for each received packet to the received data packets, and then outputs the data packets.

Preferably, the selection means determines that packets having this packet header and a payload of packet-size data following this packet header are good packets if the error indicator flag denotes "no loss" and the sequence number field is in the correct sequence.

Further preferably, the selection means determines that packets having this packet header but not having a payload of packet data following the packet header is a loss packet (dropped packet) if the error indicator flag denotes a "loss packet" and the sequence number field is in the correct sequence.

A seventh error concealment method according to the present invention is a method for determining the consecutive burst loss count. This method comprises steps of: obtaining the packet headers and reading the error indicator fields; recording the sequence number x when the burst start is encountered; recording the sequence number y when the burst end is encountered; and computing the number of consecutive packets in the burst loss as (y-x)+1 packets.

Preferably, this method for detecting the start of burst loss comprises steps of: detecting that the current packet is a loss packet; and detecting that the previous packet is a good packet.

Further preferably, the method of detecting the end of burst loss comprises steps of detecting that the current packet is a loss packet; and detecting that the following packet is a good packet.

A method according to an eighth embodiment of the invention selects audio error concealment algorithms without storing a long period of audio data for analysis using error statistics generated by the audio packet receiver or other reliable network node capable of collecting network statistics and generating error pattern format based on the second method described above.

Other objects and attainments together with a fuller understanding of the invention will become apparent and appreciated by referring to the following description and claims taken in conjunction with the accompanying drawings.

BRIEF DESCRIPTION OF THE DRAWINGS

Fig. 1 is a block diagram of a dynamic error concealment selector according to the present invention;
Fig. 2 (a) shows the header and data fields in a valid packet, and Fig. 2 (b) shows the fields in a dropped packet (containing only a header and no data);
Fig. 3 (a) to (d) show the signal at major nodes in the error concealment selector show in Fig. 1;
Fig. 4 (a) to (d) describe different algorithms;
Fig. 5 is a flow chart of an error concealment selection process according to the present invention;
Fig. 6 is a flow chart of a method for determining the burst loss count;
Fig. 7 is a flow chart of a selection process for processing the first n consecutive packets;
Fig. 8 is a flow chart of a selection process for processing the next p consecutive packets;
Fig. 9 shows part of a stream having eight consecutive dropped packets;
Fig. 10 is a flow chart of a mute switching process;
Fig. 11 is a flow chart of a merging process when the error-concealed packet is not replaced with silence;
Fig. 12 is a flow chart of a merging process when the error-concealed packet is replaced with silence;
Fig. 13 showing conversion of an error pattern detected in an audio packet buffer to a numerical statistic used for error concealment; and
Fig. 14 is a block diagram of an audio packet receiver having an error concealment selector module according to the present invention.

DESCRIPTION OF THE PREFERRED EMBODIMENTS

Preferred embodiments of the present invention are described below with reference to the accompanying figures.

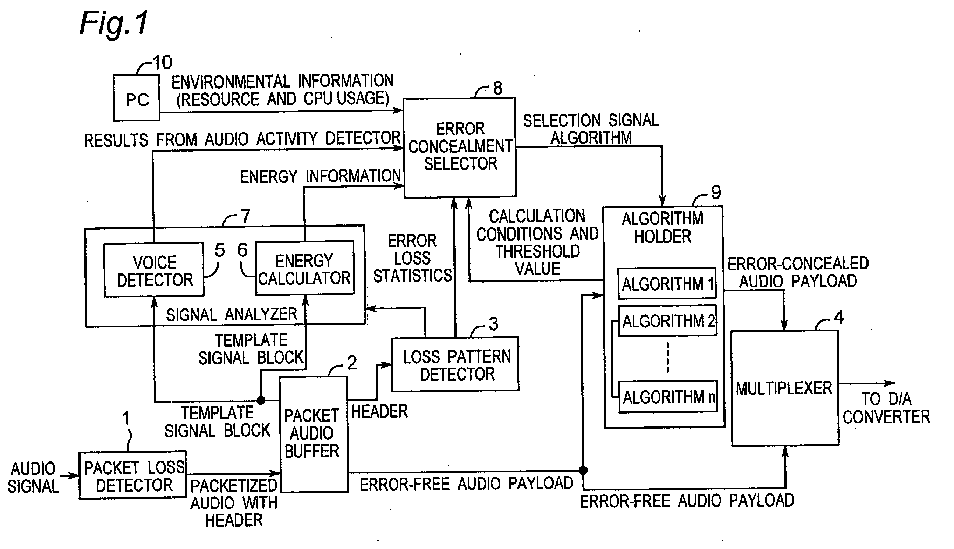

The error concealment apparatus shown in Fig. 1 has a packet loss detector 1, packet audio buffer 2, loss pattern detector 3, a multiplexer 4 that functions as a digital audio payload manager, a signal analyzer 7, an error concealment selector 8, and an algorithm holder 9. The signal analyzer 7 has a voice detector 5 and an energy calculator 6. These components 1 through 9 are controlled by a computer 10.

Operation of this error concealment apparatus is described next.

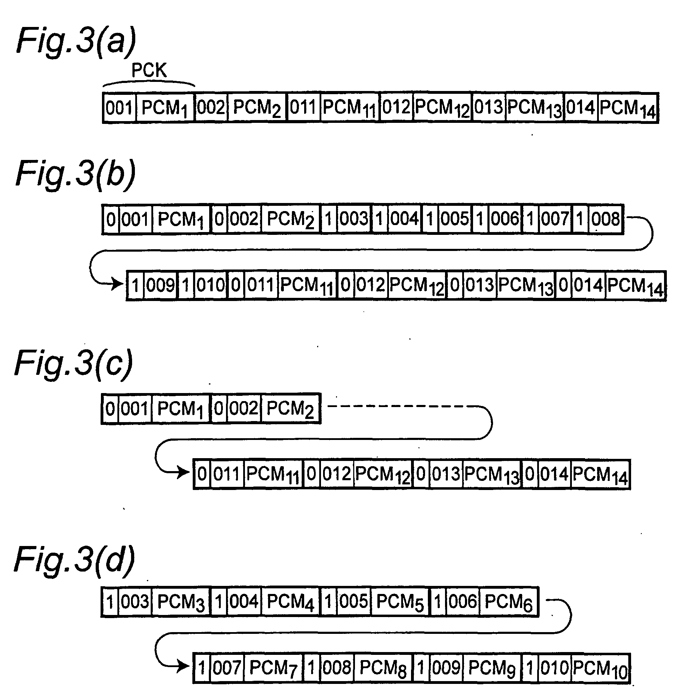

A voice signal (payload) as shown in Fig. 3 (a) is carried in packet 1. This voice signal is a voice signal such as carried by telecommunication networks. The voice signals are processed by pulse code modulation (PCM) and divided between multiple packets for transmission. In the example shown in Fig. 3 (a), the voice signal is split and transmitted in 14 packets. Note that packets 003 to 010 of these fourteen packets have been dropped in this example. Operation of this error concealment apparatus is therefore described assuming that packets have been dropped from the voice signal input to the packet loss detector 1.

The packet loss detector 1 detects the packet sequence numbers, and determines if any packets have been dropped by detecting whether the sequence numbers are consecutive. The packet loss detector 1 adds a error indicator flag set to 0 to the beginning of every valid packet received. If packet loss is detected, a substitution packet is generated, the dropped sequence number is added to the substitution packet, and the error indicator flag is set to 1 and added to the beginning of the packet.

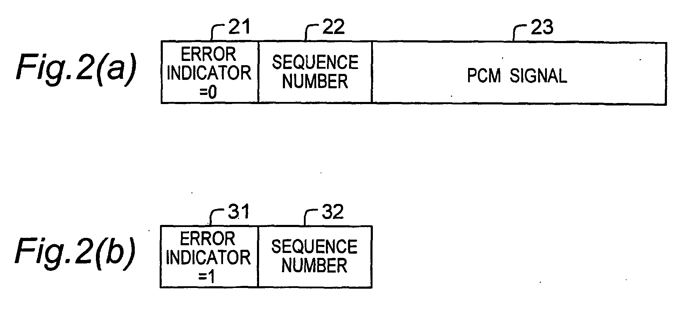

As shown in Fig. 2 (a) and (b), the header of the packet output from the packet loss detector 1 includes an error indicator field and a sequence number field. Valid packets and good packets contain a header and payload. As shown in Fig. 2 (a), the payload contains a PCM signal 23. A substitution packet (or loss packet) contains only the header and no payload. The error indicator flag is set to 0 if the packet is error free, but is set to 1 in loss packets. The sequence number field contains a sequence number that is consecutive through both valid packets and loss packets.

Fig. 3 (b) shows the output signal from the packet loss detector 1, that is, the input signal after packet loss detection and substitution packets have been added.

The packet audio buffer 2 takes the signal shown in Fig. 3 (b) from the packet loss detector 1, buffers and delays the signal, and then distributes the packets based on the flag settings. This delay depends on the size of the PCM signals in the packets arriving at the receiver. Valid packets with the error indicator flag set to 0 are simply passed from the packet audio buffer 2 to the multiplexer 4 and to the algorithm holder 9.

These error indicator flags can be deleted in the output from the packet audio buffer 2.

The packet audio buffer 2 outputs only the header (containing at least the error indicator flag and sequence number) from each packet to the loss pattern detector 3. The loss pattern detector 3 therefore receives the flags and corresponding sequence numbers. For the signal shown in Fig. 3 (b), the loss pattern detector 3 receives a flag pattern signal with the flag pattern 00111111110000, and the sequence number of reach flag (i.e., numbers 001 to 014 in this example).

The packet audio buffer 2 outputs only the PCM data payload of the packet from which the headers have been stripped to the signal analyzer 7. Note that the packets could be passed with the header included.

The signal analyzer 7 receives the flag pattern signal from the loss pattern detector 3, and detects the PCM data in the valid packets with a 0 error indicator flag at the point in the flag pattern where the flag changes from 0 to 1. In the example shown in Fig. 3 (b), the signal analyzer 7 therefore gets the PCM data from signal PCM2. The PCM signal latched by the signal analyzer 7 is then used as the template 'signal for signal analysis. The template signal can be a short signal composed of the PCM signal from one valid packet, or a longer signal composed of the PCM signals from multiple valid packets.

The voice detector 5 detects whether the input template signal (signal PCM2) is a voice signal or non-voice signal. More specifically, the voice detector 5 detects if the voice signal is a signal from a telephone conversation or is some other signal. A method such as described in reference [6] cited above can be used for this determination. The voice detector 5 therefore outputs a signal denoting whether the template signal is a voice signal or non-voice signal.

The energy calculator 6 determines and outputs the PCM signal energy level, that is, it determines the amplitude of the demodulated PCM signal and outputs a signal value denoting the average amplitude W of the demodulated PCM signal.

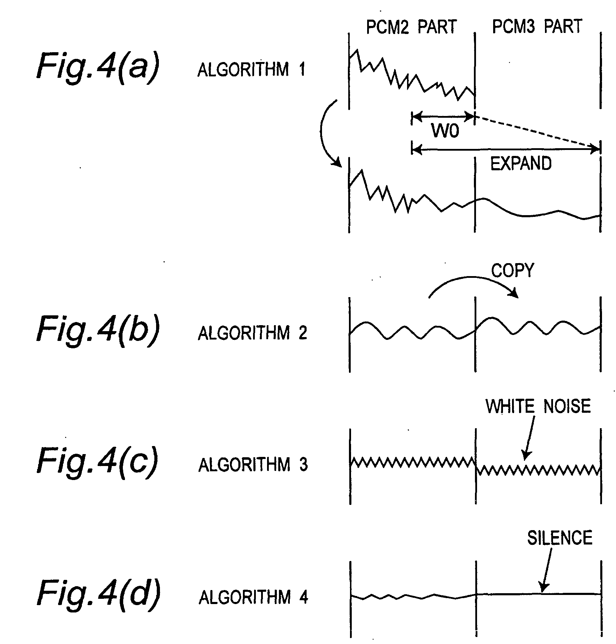

The algorithm holder 9 stores different algorithms used to generate the inserted PCM signals used in the substitution packets. Four such algorithms are shown by way of example in Fig. 4.

Algorithm$_1$ shown in Fig. 4 (a) is an algorithm for generating the PCM signal of a dropped packet using the PCM signal of the valid packet immediately preceding the dropped packet. More specifically, this algorithm defines a window W0 covering a last part or all of the voice signal demodulated from the PCM signal of the valid packet, and expands this window to include both this window W0 and the voice signal part of the next dropped packet. This expanded voice signal is then modulated to a PCM signal again, producing the substitution packet. This algorithm is called "pitch waveform substitution."

Algorithm$_2$ shown in Fig. 4 (b) copies the PCM signal of the valid packet immediately before the dropped packet to generate a substitution packet. This algorithm is called "packet repetition."

Algorithm$_3$ shown in Fig. 4 (c) substitutes a packet replacing the PCM signal of the dropped packet with a PCM signal for white noise. This algorithm is called "noise substitution."

Algorithm$_4$ shown in Fig. 4 (d) substitutes a packet replacing the PCM signal of the dropped packet with a PCM signal producing silence. This algorithm is called "silence substitution."

Multiple algorithms are thus stored in the algorithm holder 9, and each of the algorithms generates a PCM signal for the dropped packet and outputs a substitution packet.

Which of these multiple algorithms is used is determined by the selection signal output by the error concealment selector 8. Operation of this error concealment selector 8 is described next.

The error concealment selector 8 receives the flag pattern signal from the loss pattern detector 3, the voice/non-voice signal and energy information from the signal analyzer 7, and environmental status information indicating CPU usage from the computer 10. Parameter t1 in Table 3 indicates the usage of the computer's CPU. If CPU usage is 70% or more, parameter t1 is set to 0; if CPU usage is 50% to 70%, parameter t1 is set to 0.15; if CPU usage is 30% to 50%, parameter t1 is set to 0.3; and if CPU usage is less than 30%, parameter t1 is set to 0.5. [NOTE: TABLE 3 IS WRONG]

As shown in Table 4, parameter t2 denotes memory usage in the computer. As shown in Table 4, if memory usage is 70% or more, parameter t2 is set to 0; if memory usage is 50% to 70%, parameter t2 is set to 0.15; if memory usage is 30% to 50%, parameter t2 is set to 0.3; and if memory usage is less than 30%, parameter t2 is set to 0.4. [NOTE: TABLE 4 IS WRONG]

These parameters t1 and t2 are then added, and the sum is used as threshold T.

The error concealment selector 8 determines from the signal supplied from the voice detector 5 whether the PCM signal of the substitution packet to be generated should be a voice signal or non-voice signal. More specifically, if the valid packet preceding the dropped packet is a voice signal, the PCM signal is generates to be voice signal, but if the preceding packet was a non-voice signal, then the PCM signal is generated as a non-voice signal.

If a voice signal is to be generated, whether pitch waveform substitution or packet repetition is to be used is selected as shown in Table 1. More specifically, if the threshold T is 0.4 or greater, a signal selecting pitch waveform substitution, that is, $algorithm_1$, is output. However, if threshold T is less than 0.4, packet repetition, that is, $algorithm_2$, is selected.

If a non-voice signal is to be generated, whether noise substitution or silence substitution is to be used is selected as shown in Table 2. If the average energy W is 0.3 or greater, a selection signal for selecting noise substitution, that is, $algorithm_3$, is output. If the average energy W is less than 0.3, then silence substitution, that is, $algorithm_4$, is selected.

The algorithm selection signal selected as described above is then output to the algorithm holder 9, which selects the algorithm accordingly. The PCM signal of the substitution packet is then generated based on the selected algorithm, a header containing the corresponding sequence number is added, and the result is output to multiplexer 4. As a result, a substitution packet generated as shown in Fig. 3 (d) is output from the algorithm holder 9, and the valid packets shown in Fig. 3 (c) are output from packet audio buffer 2, to the multiplexer 4.

The multiplexer 4 then arranges the errorless valid packets, and the generated substitution packets, in sequence number order, and outputs the packet sequence to a digital/analog converter.

If the number of selectable algorithms is small, such as only two, selection could be based on only signals from the voice detector 5, or based only on signals from the energy calculator 6, or based only on threshold T.

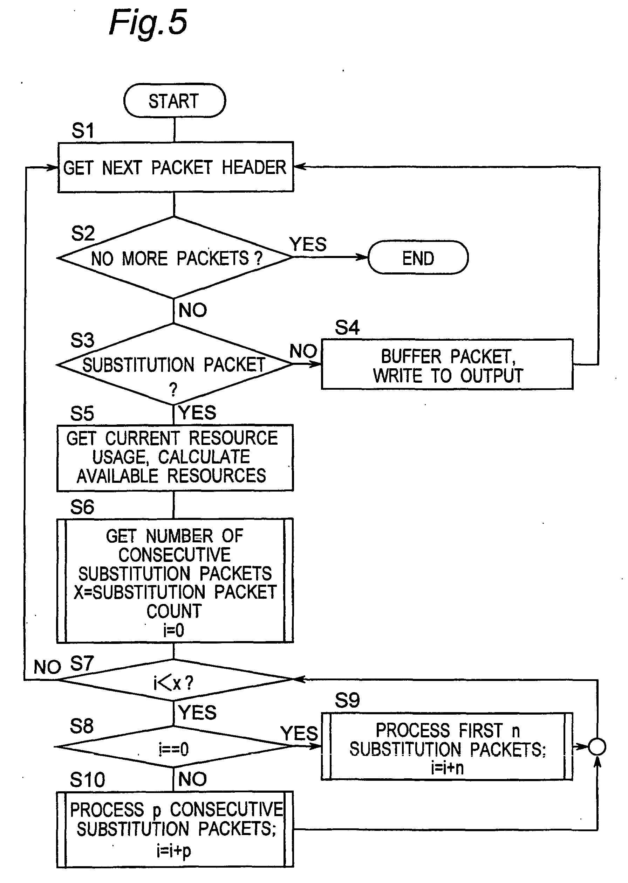

Fig. 5 is a flow chart of the process for selecting the error concealment method.

The first step is acquiring the packet header from the packet audio buffer 2 (step S1). Whether another packet is in the packet audio buffer 2 is then checked (step S2). If another packet is not in the packet audio buffer 2, the selection process ends. Otherwise, the flag in the error indicator field is read (step S3). If the error indicator flag is 1, the current packet is recognized as a substitution packet (v2 (b)). If the error indicator flag is 0, the packet is recognized as a valid packet (Fig. 2 (a)). (Case 1: a substitution packet is received)

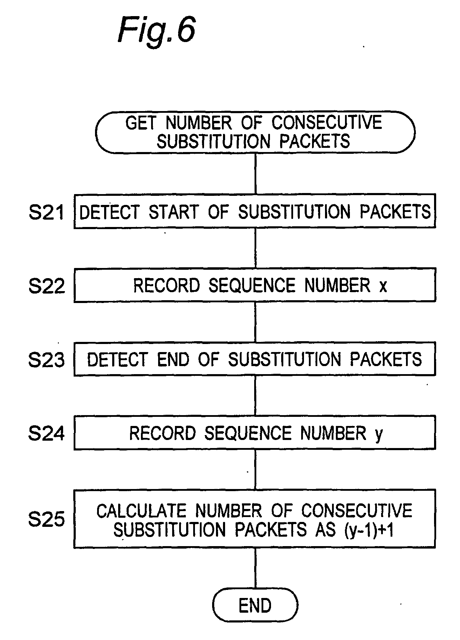

Error concealment is then applied. First information about current resource usage is checked by calculating current CPU usage and memory usage (step S5). The number of consecutive substitution packets is then counted (step S6) by the loss pattern detector 3. A method of counting the substitution packets is described next with reference to the flow chart in Fig. 6.

The first substitution packet is first detected (step S21). This is done by reading the error indicator field in each packet to find the first substitution packet having the error indicator flag set to 0 after a valid packet in which the error indicator flag is set to 1. When the beginning of a substitution packet sequence is found, the sequence number x of that first substitution packet is stored (step S22). The end of the substitution packet sequence is then detected (step S23). This is done by again reading the error indicator flags to find the current packet that is a substitution packet followed by a valid packet. When the end of the substitution packet sequence is found, the sequence number y of that packet is saved (step S24). The number of consecutive substitution packets is then obtained as (y-x)+1 (step S25).

Referring back to Fig. 5, the substitution packet sequence detected in step S6 is processed. The substitution packets are processed individually. More specifically, the error concealment techniques can differ from packet to packet.

Whether all substitution packets have been processed is then determined (step S7), and whether all n packets have been processed is determined (step S8). The first *n* substitution packets in the consecutive substitution packet sequence are then processed (step S9) where *n* is calculated from the number of consecutive substitution packets.

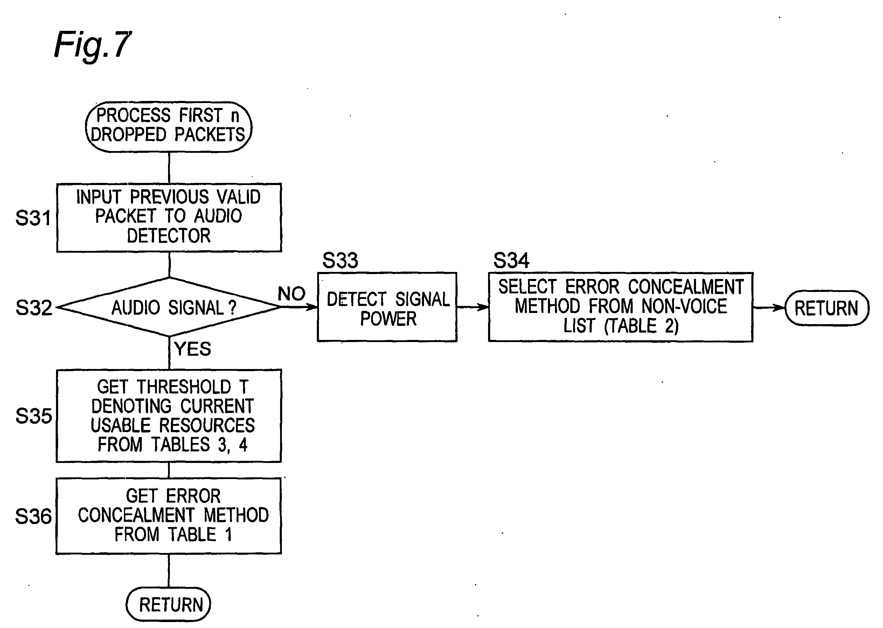

Details of processing the first *n* packets is described with reference to the flow chart in Fig. 7.

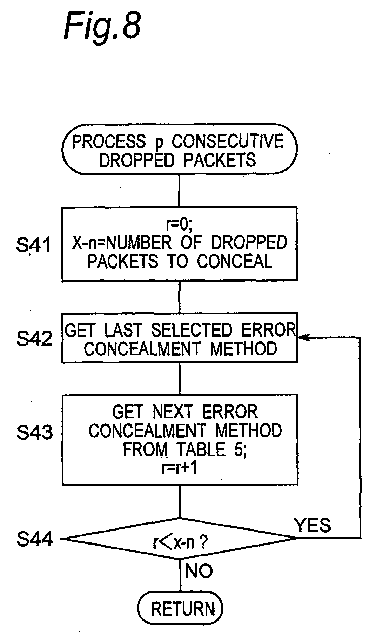

After these *n* packets are processed, the remaining packets (*p* packets in this example) are processed (step S10). Details of processing these *p* packets are described with reference to the flow chart in Fig. 8.

Case 2: Valid packets received

When a valid packet is received, the data segment 23 shown in Fig. 2 (a) is buffered and sent to the multiplexer 4 (step S4). If the packet following this valid packet is determined to be a substitution packet, the valid packet is used as a template signal by the signal analyzer 7.

Processing the first *n* substitution packets is described with reference to Fig. 7. First, the valid packets before and after the *n* substitution packets are sent to the voice detector 5 and stored for use as template signals (step S31). The voice detector 5 then detects whether the PCM signal of that valid packet is a voice signal or non-voice signal (step S32). If the valid packet is a voice signal, the threshold T is calculated from the current operating conditions, including CPU usage and memory usage, as described above. This threshold T is then compared with the threshold value T1 in the list (Table 1) of specific error concealment techniques for processing voice signal (step S35). The error concealment method is determined by finding the range in Table 1 in which this threshold T belongs (step S36), and error concealment is then applied based on the selected algorithm.

If the valid packet is a non-voice signal in step S32, the average energy W is calculated for all signals (step S33). The error concealment method is selected from the non-voice algorithm list (Table 2) based on the average energy W (step S34). More specifically, the average energy W is compared with threshold value T2. If the average energy W is less than T2 (that is, a value of 0 to 0.3 in Table 2), it can be ignored and silence substitution is used. However, if the average energy W is greater than threshold value T2 (exceeds 0.3 in Table 2), noise having average energy similar to white noise is generated and used as the substitution packet.

If the sequence of substitution packets is long, signal amplitude is gradually reduced in the plural p packets substituted after inserting the first n packets until a mute effect is achieved.

The dynamic selector described here can select from four error concealment methods. These four error concealment methods include two from the voice list and two from a non-voice list.

The voice list includes the following methods.

Table 1

| Algorithm selection for voice signals | |
| --- | --- |
| **Error Concealment method** | **Threshold, T1 (0-1)** |
| Pitch Waveform substitution (algorithm 1) | $\geq 0.4$ |
| Packet repetition (algorithm 2) | 0 - 0.4 |

The non-voice list includes the following methods.

Table 2

| Algorithm selection for non-voice signals | |
| --- | --- |
| **Error Concealment method** | **Threshold, T2 (0-1)** |
| Noise substituion (algorithm 3) | $\geq 0.3$ |
| Silence substitution (algorithm 4) | 0 - 0.3 |

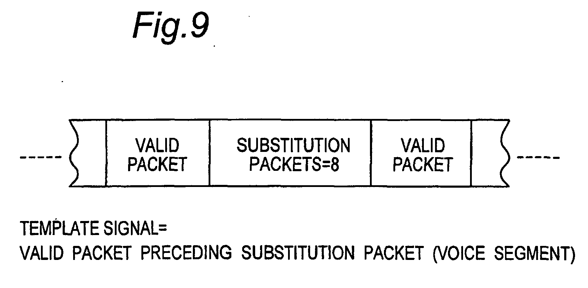

When a consecutive sequence of substitution packets is received as detected by step S6 in Fig. 5, such as when eight consecutive substitution packets are received as shown in Fig. 9, $n$ is set as determined by equation 1 below.

$$0.3 * \text{missing\_packet\_count} = 3 \tag{1}$$

The first $n$ packets, that is, three packets in this example, are processed by the method shown in Fig. 7. The first valid packet before these three substitution packets is stored in the signal analyzer 7 as the template signal. This template signal is first sent to the voice detector 5 to determine whether it is a voice signal or non-voice signal (step S31). In this example the template signal is a voice signal, and the voice detector 5 returns the voice flag (step S32). Current resource usage is then checked. The threshold T is then calculated based on two standard values, specifically CPU usage CPC and memory usage MEC. If CPU usage CPC exceeds 70%, threshold parameter t1 is set to 0. If memory usage MEC exceeds 70% of all available memory, threshold parameter t2 is set to 0. These threshold parameters are calculated as shown below.

Table 3:

| Setting the CPU usage parameter t1 | |
| --- | --- |
| **CPU usage (CPC)** | **Parameter t1** |
| CPC >= 70 % | 0 |
| 70% > CPC >=50% | 0.15 |
| 50% > CPC >= 30% | 0.3 |

Table 3: (continued)

| Setting the CPU usage parameter t1 | |
|---|---|
| **CPU usage (CPC)** | **Parameter t1** |
| 30% > CPC | 0.5 |

Table 4:

| Setting memory usage parameter t2 | |
|---|---|
| **Memory usage: MEC** | **Parameter, t2** |
| MEC >= 70 % | 0 |
| 70% > MEC >=50% | 0.15 |
| 50% > MEC >= 30% | 0.3 |
| 30% > MEC | 0.4 |

Threshold T is calculated from the following equation (2).

$$T = t1 + t2 \qquad (2)$$

If current CPU usage is 40% and memory usage is 50%, threshold T is 0.45. Because the previous valid packet is a voice signal, threshold T is compared with T1 (step S35). If the previous valid packet is a non-voice signal, average energy W is compared with T2. In this case threshold T could be compared with T2 instead of comparing average energy W. The selection criteria is that T exceeds either T1 or T2, and the error concealment method with the closest value is selected. Because threshold T is 0.45 in this case, pitch waveform substitution is selected (step S36). The waveform of the first three substitution packets is therefore concealed using pitch waveform substitution.

Subsequent substitution is done using the algorithm shown in Fig. 8 and described below.

The value of (X - n) shown in step S41 in Fig. 8 is, in this example, (8 - 3) = 5. More specifically, X is the number of consecutive substitution packets, n is the first packet, and the difference is the number of substitution packets on which the same process is repeated.

Table 5 shows the relationship between the previously selected error concealment method and the error concealment method selected next. If the' error concealment method applied to the previous substitution packet is pitch waveform substitution, the error concealment method applied to the next substitution packet is packet repetition with amplitude multiplied C times (C < 1). If the error concealment method of the previous substitution packet is packet repetition, the error concealment method of the next substitution packet is also packet repetition with amplitude multiplied C times (C < 1). If the error concealment method of the previous substitution packet is noise substitution, the error concealment method of the next substitution packet is also noise substitution. If the error concealment method of the previous substitution packet is silence substitution, the error concealment method of the next substitution packet is also silence substitution.

In the above example pitch waveform substitution is applied to the previous substitution packet. Packet repetition is therefore applied to the next packet, as well as to the next packet after that. Packet repetition thus continues with a gradual reduction in amplitude. Error concealment thus repeats five times (step S43). Packet substitution is thus applied packet by packet until all remaining five packets are concealed (step S44). Packet processing ends after the fifth packet is concealed.

Table 5

| Next packet substitution | |
|---|---|
| **Previous** | **Next** |
| Pitch Waveform | Packet Repetition (amplitude * C) |
| Packet Repetition | Packet Repetition (amplitude * C) |
| Noise Substitution | Noise Substitution |

Table 5   (continued)

| Next packet substitution | |
|---|---|
| **Previous** | **Next** |
| Silence Substitution (muting) | Silence Substitution (muting) |

When substitution repeats as described above, substitution energy gradually reduces, and when the average energy becomes less than the silence threshold ST, silence substitution is used for all subsequent substitutions.

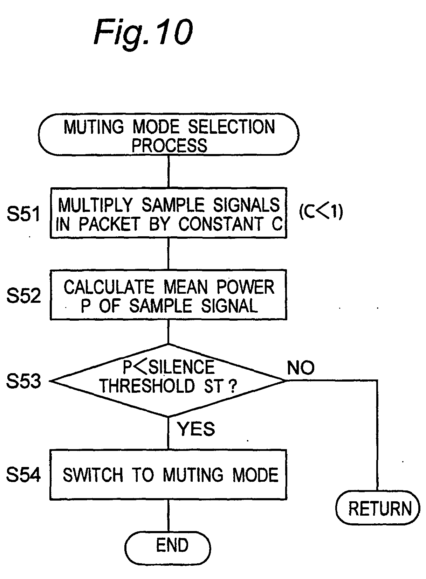

Fig. 10 is a flow chart of the muting switching process. This muting switching process includes, for example, a step setting the silence threshold ST, multiplying each of the sampling signals in a packet by a constant C with a value less than 1 (step S51), multiplying the sampling signal from step S51 by the average energy P of the packet or part of the packet (step S52), comparing average energy P and silence threshold ST (step S53), and switching to a muting mode when the average energy P is less than silence threshold ST (step S54).

Merging can be used to assure a smooth transition at the boundary between a valid packet and substitution packet. If the difference in average energy at this boundary is less than a specific value Y, merging is not needed. Otherwise, merging is necessary. Merging is done by the multiplexer 4.

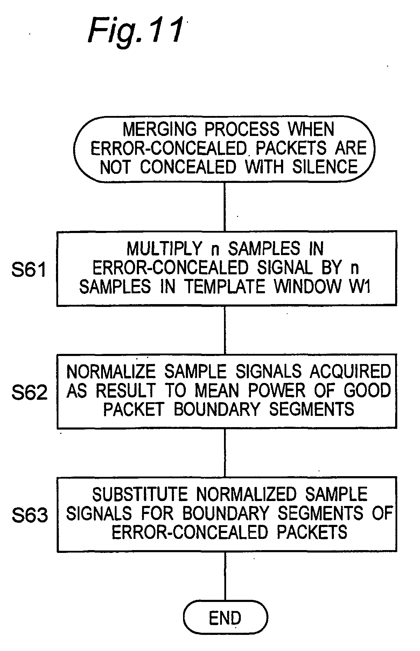

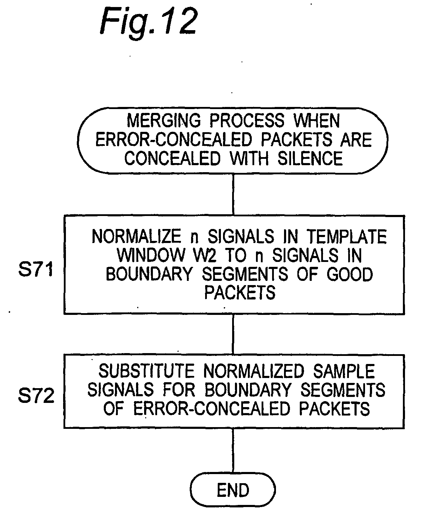

A merging process is described next with reference to Fig. 11 and Fig. 12. Fig. 11 is a flow chart of the merging process when silence substitution was not used for packet error concealment.

A predefined template window W is composed of n signal samples. The last packet in a consecutive valid packet sequence is handled in window We. The first packet in a consecutive substitution packet sequence following the valid packet sequence is handled in window Ws (step S61). Windows We and Ws therefore indicate the boundary between a valid packet and a substitution packet. The average energy in window We is then obtained. The energy in window Ws is normalized by this average energy (step S62). The sample signals in window Ws are replaced so that there is a smooth energy change between windows We and Ws (step S63).

Fig. 12 is a flow chart of the merging process used when the error concealment packets are replaced with silence. Template window W2 is defined only for using silence substitution. Template window W2 is normalized to the value of the mean energy of the boundary segments between good packets (step S71). The normalized samples then directly replace the boundary segments of the error concealment packets (step S72).

The algorithm selection process is based on information generated from network performance statistics. These statistics are distributed over the network in a format similar to the Pattern_Loss structure by a network node capable of generating such information. This information could also be generated based on the packet audio loss pattern received by the packet audio buffer over an extended time. This selection process is based on long term analysis, which 'could also be defined as the time interval of an error loss pattern exceeding the time interval of audio buffered to the packet audio buffer. For error concealment over an extended time, the data elements in the Pattern Loss structure can be used for error concealment applied to audio data received by the packet audio buffer 2 in Fig. 1.

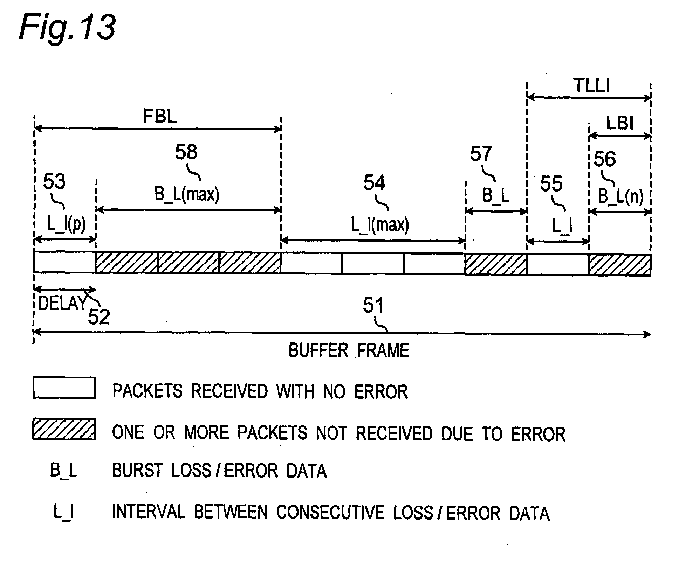

More specifically, short term analysis in which only consecutive packets entering the packet audio buffer 2 are examined to select the error concealment method is described above. Long term analysis in which the error concealment method is selected using the results of continuously checking packets entering the packet audio buffer 2 for a specified long time (the buffer frame period shown in Fig. 13) is described below. In long term analysis, the data values (1) to (9) described below are updated each time the buffer frame period passes.

The loss pattern detector 3 executes either short term analysis or long term analysis.

So that error concealment can be done in the same way in an audio broadcast environment, these statistics in the form of the Pattern_Loss structure enable error concealment to be performed in a unified manner. Different receivers do not necessarily start receiving the same broadcast at the same time, but the different receivers can select and apply the algorithm. If the receiver has little available computing capacity, the loss pattern detector 3 can be turned off. Selecting the error concealment method by means of long term analysis depends on the limited loss pattern observed by the packet audio buffer 2 (that is, the flag pattern described above), and the statistical mean (data values (1) to (9) described below) of the loss pattern generated by the loss pattern detector 3 in Fig. 1.

It should be noted that the algorithm could be selected using the results of both long term analysis and short term analysis, or only using the results of either long term analysis or short term analysis.

The error statistics generated by the loss pattern detector 3 are in the format of the structure shown below measured over a buffer frame period. The buffer frame period used to determine the temporal loss pattern and the period is defined as a unit time, or as a block of a digital audio signal composed of many digital audio data packets. It is more effective for the buffer frame period to be longer than the packet period stored in the packet audio buffer.

Pattern_Loss {

(1) Delay; /* Units in seconds or packet payload size (bytes/bits) */ (delay 52 of the size of the PCM signal in one packet on the time base)
(2) Mean Loss Interval; /* average time interval between 2 dropped packets */ (average of L_I)
(3) Max Loss Interval; /* maximum time interval between 2 dropped packet */ (L_I(max) 54)
(4) First Loss Interval; /* time interval measured from the beginning of the buffer frame to the beginning of Packet loss */ (L_I(p) 53)
(5) Last Loss Interval; /* time interval measured from the first packet of the last group of non-erroneous packets to the end of the buffer frame */ (TTL1)
(6) Mean Burst Interval; /* average time interval between 2 non-erroneous or loss packets */ (average of B_L)
(7) Max Burst Interval; /* maximum time interval between 2 non-erroneous or loss packets */ (B_L(max))
(8) First Burst Interval; /* first group of consecutive erroneous or loss packets measured from the beginning of the buffer frame to the end of the last packet of the group of error packets */ (FBL)
(9) Last Burst Interval; /* Time interval measured from the first packet of the last group of error packets to the end of the buffer frame */ (LBI)
}

Fig. 13 illustrates the method used in determining and describing the error pattern by generating statistics from the Pattern_Loss structure as shown above.
Buffer frame 51 has an arbitrary length determined by the number of audio data packets in which the error pattern is to be determined. The packet length in this example is fixed and is determined by Delay parameter 52. The Mean Loss interval is the average of all loss intervals measured within the Buffer Frame. In this example:

$$\text{Mean Loss Interval} = \{L\_I(max) + L\_I + L\_I(p)\}/\text{total}$$

interval of error-free packets.

The mean burst interval is the average of all burst intervals measured within the Buffer Frame. In this example:

$$\text{Mean Burst Interval} = \{B\_L(max) + B\_L + B\_L(n)\}/\text{total}$$

interval of error packets.

Variable L_I(p) 53 gives the value of the First Loss Interval element of the Pattern Loss structure.
Variable L_I(max) 54 gives the value of the Max Loss Interval element of the Pattern_Loss structure.
Variable L_I 55 is one data value used to measure the loss interval within the Buffer Frame.
The Last Burst Interval element of the Pattern Loss structure is equivalent to variable B_L(n) 56.
Variable B_L 57 is one of the burst error values measured within the buffer frame.
Variable B_L(max) 58 is the equivalent of the Max Burst Interval element of the Pattern_Loss structure for the Buffer frame shown by way of example in Figure 13.
The following Table 6 shows a number of examples of how the error loss statistics derived from the Packet_Loss structure can be used by the error concealment selector to make a better decision on selecting the error concealment algorithm to produce an error-free audio stream with optimal error concealment. The error concealment is applied to the audio packets stored in the packet audio buffer 2 shown in Fig. 1. In some cases, the packet audio buffer 2 can only store audio signals for a short period. The specific time interval of the audio signals and the loss time interval presented here do not have specific numeric values but instead uses a high and low representation for relative comparison. For detail implementation, it is necessary to know the packet size and the sampling rate of the audio signals and the type of error concealment algorithm available.

Table 6

| | Use of error loss statistics by the error concealment selector | | |
|---|---|---|---|
| s/n | Packet_Loss Value | Example of Error Concealment Algo Used | Description |
| 1 | LBI > specified value | Muting | Due to excessive loss, muting is best method. |
| 2 | (Mean Burst Lost Interval < specified value) AND (LBI = 0) | Pitch waveform substitution or Packet replication | Other error concealment methods that perform better in a low bursty error environment. |
| 3 | [B_L(max) < specified value] AND [(L_I)(max) > specified value] AND LBI = 0 | Time scale modification | Other Error concealment methods capable of extending the time scale have close to undetectable error output. |

Note that the Pattern_Loss structure described above is just one example of statistical analysis that can be used to describe the error loss pattern, and the invention shall not be limited thereto. Furthermore, the buffer frame period and packet loss interval can also be described by bit count rather than time.

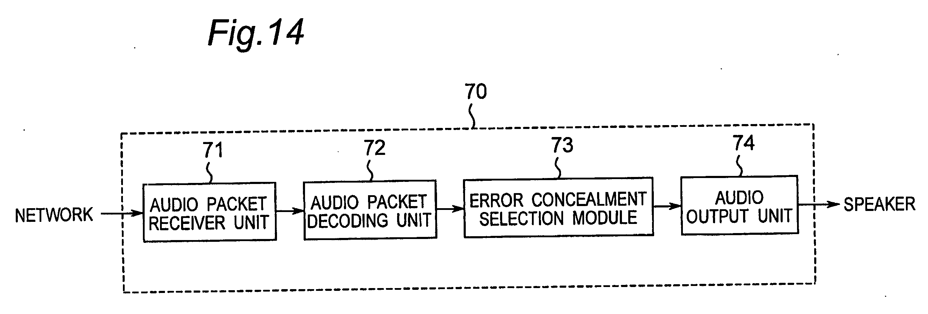

Fig. 14 is a block diagram of an audio packet receiver comprising an error concealment selector module according to the present invention. The receiver 70 shown in Fig. 14 has an audio packet receiver unit 71, audio packet decoding unit 72, error concealment selection module 73, and audio output unit 74.

The audio packet receiver unit 71 receives audio packets from a network and detects whether any audio packets were dropped in the received stream. If audio packet loss is detected, the detection information is passed to the audio packet decoding unit 72.

If the audio packets output from the audio packet receiver unit 71 are encoded, the audio packet decoding unit 72 decodes the packets to produce a PCM audio stream.

The error concealment selection module 73 generates the needed PCM packets. Note that this error concealment selection module 73 is as shown in the block diagram in Fig. 1.

The audio packet decoding unit 72 also receives the packet loss information detected by the audio packet receiver unit 71, and outputs this' packet loss information to the error concealment selection module 73.

The error concealment selection module 73 determines whether the packets received from the audio packet decoding unit 72 are good packets or loss packets, and executes packet processing accordingly as described above.

If a packet contains the packet header added by the audio packet receiver unit 71 and a payload following the header, the error indicator flag added to the header denotes a good packet (i.e., not a dropped packet), and the packet sequence number in the sequence number field is in the correct order, the error concealment selection module 73 recognizes the packet as good packet. If the error indicator flag in the packet header added by the audio packet receiver unit 71 denotes a dropped packet, and the packet sequence number in the sequence number field is in the correct order, the error concealment selection module 73 recognizes that packet as an error packet.

The audio output unit 74 converts digital audio processed and output by the error concealment selection module 73 to analog audio, and outputs the result from a speaker.

The audio packet decoding unit 72 can be omitted when the audio packets output from the audio packet receiver unit 71 is unencoded PCM audio.

This invention allows a combination of different error concealment methods to be used at different times. The most appropriate choice can be selected dynamically at run-time. An error concealment algorithm with less complexity can therefore be used when resources are low, and a more effective but more complex algorithm can be chosen if sufficient resources are available.

The algorithms are selected from a set of pre-defined algorithms with different characteristics. In the case of speech, the algorithms can be classified in voice and non-voice classes. The error concealment algorithm applied to voice segments can then be chosen from one list of methods, and the error concealment algorithm applied to non-voice segments can be chosen from another list of methods. For burst loss in which many consecutive packets are missing, this algorithm selector enables the burst loss to be concealed using different methods with different packets in the burst loss.

The invention also enables an audio receiver with a small audio buffer size and low latency to implement complex error concealment algorithms by using error statistics to measure the error pattern in packetized audio streams. Based on the error statistics collected, the error concealment selector can make better decisions regarding the type of error concealment to be used for particular audio loss frames, and thereby output an audio stream with better error concealment.

Although the present invention has been described in connection with the preferred embodiments thereof with reference to the accompanying drawings, it is to be noted that various changes and modifications will be apparent to those skilled in the art. Such changes and modifications are to be understood as included within the scope of the present invention as defined by the appended claims, unless they depart therefrom.

**Claims**

1. An error concealment apparatus for detecting dropped packets in an audio signal composed of multiple packets, and generating substitution packets for concealing the dropped packets, comprising:

   a packet loss detector (1) for detecting dropped packets in a received stream of valid packets;
   an extraction means (2, 3) comprising a buffer and extracting a valid packet before a dropped packet;
   an analysis means (7) for analyzing audio signals in the extracted valid packets;
   an algorithm storage means (9) for storing a plurality of algorithms and generating a substitution packet using one of the algorithms;
   a selection means (8) for determining which of the plurality of algorithms to select using the result from the analysis means; and
   a multiplexer (4) for inserting the substitution packet at the location of the dropped packet in the valid packet stream.

2. An error concealment apparatus as described in claim 1, further comprising:

   a CPU (10) for operational control;
   memory (10) operating in conjunction with the CPU; and
   a resource availability calculating means (10) for measuring available CPU and memory capacity;

   wherein the selection means uses the calculated available capacity to determine which of the algorithms to use.

3. An error concealment apparatus as described in claim 1, wherein the analysis means (7) comprises a voice detector (5) for determining if the audio signal contains a voice signal or silence.

4. An error concealment apparatus as described in claim 1, wherein the analysis means (7) comprises an energy calculator (6) for calculating audio signal energy.

5. An error concealment apparatus as described in claim 1, wherein the packet loss detector (1) for adding to all packets that should be received a flag for identifying valid packets and dropped packets.

6. An error concealment apparatus as described in claim 5, wherein the extraction means extracts the flags and generates a flag pattern in the flag sequence.

7. An error concealment apparatus as described in claim 6, wherein the selection means extracts the flag pattern, and based on flag pattern analysis determines which of the multiple algorithms to select.

8. An error concealment apparatus as described in claim 1, wherein the plurality of algorithms include:

   a first algorithm for correcting the audio signal in the valid packet preceding a dropped packet to create an audio signal for the dropped packet;
   a second algorithm for copying the audio signal of the valid packet preceding a dropped packet to create the audio signal of the dropped packet;
   a third algorithm for creating the audio signal of a dropped packet using white noise; and
   a fourth algorithm for creating the audio signal of a dropped packet using a silence signal.

9. An error concealment method for detecting dropped packets in an audio signal composed of multiple packets, and generating substitution packets for concealing the dropped packets, comprising:

a step for detecting dropped packets in a received stream of valid packets;
a step for extracting a valid packet before a dropped packet;
a step for analyzing audio signals in the extracted valid packets;
a step for storing a plurality of algorithms and generating a substitution packet using one of the algorithms;
a step for determining which of the plurality of algorithms to select using the result from the analysis step; and
a step for inserting the substitution packet at the location of the dropped packet in the valid packet stream.

10. An error concealment method as described in claim 9, further comprising:

a step for measuring available capacity in a CPU (10) for operational control and memory (10) operating in conjunction with the CPU; and
using the calculated available capacity to determine which of the algorithms to use.

11. An error concealment method as described in claim 9, wherein the analysis step comprises a step for determining if the audio signal contains a voice signal or silence.

12. An error concealment method as described in claim 9, wherein the analysis step comprises a step for calculating audio signal energy.

13. An error concealment method as described in claim 9, further comprising a step for adding to all packets that should be received a flag for identifying valid packets and dropped packets.

14. An error concealment method as described in claim 13, further comprising a step for extracting the flags and generating a flag pattern in the flag sequence.

15. An error concealment method as described in claim 14, further comprising a step for extracting the flag pattern, and based on flag pattern analysis determining which of the multiple algorithms to select.

16. An error concealment method as described in claim 9, wherein the plurality of algorithms include:

a first algorithm for correcting the audio signal in the valid packet preceding a dropped packet to create an audio signal for the dropped packet;
a second algorithm for copying the audio signal of the valid packet preceding a dropped packet to create the audio signal of the dropped packet;
a third algorithm for creating the audio signal of a dropped packet using white noise; and
a fourth algorithm for creating the audio signal of a dropped packet using a silence signal.

**Fig.1**

EP 1 458 145 A1

Fig.2(a)

| ERROR INDICATOR =0 | SEQUENCE NUMBER | PCM SIGNAL |
|---|---|---|

21 · 22 · 23

Fig.2(b)

| ERROR INDICATOR =1 | SEQUENCE NUMBER |
|---|---|

31 · 32

Fig.3(a)

PCK

| 001 | PCM$_1$ | 002 | PCM$_2$ | 011 | PCM$_{11}$ | 012 | PCM$_{12}$ | 013 | PCM$_{13}$ | 014 | PCM$_{14}$ |

Fig.3(b)

| 0 | 001 | PCM$_1$ | 0 | 002 | PCM$_2$ | 1 | 003 | 1 | 004 | 1 | 005 | 1 | 006 | 1 | 007 | 1 | 008 |

| 1 | 009 | 1 | 010 | 0 | 011 | PCM$_{11}$ | 0 | 012 | PCM$_{12}$ | 0 | 013 | PCM$_{13}$ | 0 | 014 | PCM$_{14}$ |

Fig.3(c)

| 0 | 001 | PCM$_1$ | 0 | 002 | PCM$_2$ |

| 0 | 011 | PCM$_{11}$ | 0 | 012 | PCM$_{12}$ | 0 | 013 | PCM$_{13}$ | 0 | 014 | PCM$_{14}$ |

Fig.3(d)

| 1 | 003 | PCM$_3$ | 1 | 004 | PCM$_4$ | 1 | 005 | PCM$_5$ | 1 | 006 | PCM$_6$ |

| 1 | 007 | PCM$_7$ | 1 | 008 | PCM$_8$ | 1 | 009 | PCM$_9$ | 1 | 010 | PCM$_{10}$ |

Fig.4(a)    ALGORITHM 1

PCM2 PART    PCM3 PART

W0

EXPAND

Fig.4(b)    ALGORITHM 2

COPY

Fig.4(c)    ALGORITHM 3

WHITE NOISE

Fig.4(d)    ALGORITHM 4

SILENCE

## Fig.5

```
              ┌─────────┐
              │  START  │
              └────┬────┘
   S1              │
┌─────────────────▼─────────────────┐
│     GET NEXT PACKET HEADER         │◄──────────────┐
└─────────────────┬─────────────────┘               │
   S2             │                                  │
        ◇─────────▼─────────◇    YES    ┌─────────┐  │
        │ NO MORE PACKETS ?  │─────────►│   END   │  │
        ◇─────────┬─────────◇          └─────────┘   │
                  │ NO                                │
   S3             │              S4                   │
        ◇─────────▼─────────◇    NO  ┌──────────────┐ │
        │ SUBSTITUTION PACKET│──────►│ BUFFER PACKET,│─┘
        │         ?          │       │WRITE TO OUTPUT│
        ◇─────────┬─────────◇        └──────────────┘
   S5             │ YES
┌─────────────────▼─────────────────┐
│     GET CURRENT RESOURCE           │
│     USAGE, CALCULATE               │
│     AVAILABLE RESOURCES            │
└─────────────────┬─────────────────┘
   S6             │
┌─────────────────▼─────────────────┐
│║    GET NUMBER OF                 ║│
│║    CONSECUTIVE                   ║│
│║    SUBSTITUTION PACKETS          ║│
│║    X=SUBSTITUTION PACKET         ║│
│║    COUNT                         ║│
│║    i=0                           ║│
└─────────────────┬─────────────────┘
  NO  S7          │
  ◇───────────────▼───────────────◇◄──────────────┐
  │            i<x ?               │               │
  ◇───────────────┬───────────────◇               │
                  │ YES          S9                │
   S8             │       ┌──────────────────────┐ │
  ◇───────────────▼───────◇  YES │ PROCESS FIRST n │ │
  │            i==0        │─────►│ SUBSTITUTION    │─○
  ◇───────────────┬───────◇      │ PACKETS;        │
   S10            │ NO           │ i=i+n           │
┌─────────────────▼──────┐       └──────────────────────┘
│║ PROCESS p CONSECUTIVE ║│
│║ SUBSTITUTION PACKETS; ║│──────────────────────────┘
│║ i=i+p                 ║│
└────────────────────────┘
```

# Fig.6

```
        ╭─────────────────────────────────╮
        │   GET NUMBER OF CONSECUTIVE     │
        │     SUBSTITUTION PACKETS        │
        ╰─────────────────────────────────╯
                        │
S21  ┌───────────────────────────────────────┐
     │ DETECT START OF SUBSTITUTION PACKETS   │
     └───────────────────────────────────────┘
                        │
S22  ┌───────────────────────────────────────┐
     │       RECORD SEQUENCE NUMBER x         │
     └───────────────────────────────────────┘
                        │
S23  ┌───────────────────────────────────────┐
     │  DETECT END OF SUBSTITUTION PACKETS    │
     └───────────────────────────────────────┘
                        │
S24  ┌───────────────────────────────────────┐
     │       RECORD SEQUENCE NUMBER y         │
     └───────────────────────────────────────┘
                        │
S25  ┌───────────────────────────────────────┐
     │  CALCULATE NUMBER OF CONSECUTIVE       │
     │  SUBSTITUTION PACKETS AS (y-1)+1       │
     └───────────────────────────────────────┘
                        │
                  ╭───────────╮
                  │    END    │
                  ╰───────────╯
```

# Fig.7

EP 1 458 145 A1

```
        ┌─────────────────────┐
        │   PROCESS FIRST n    │
        │  DROPPED PACKETS     │
        └─────────────────────┘
                 │
        ┌─────────────────────┐
  S31   │  INPUT PREVIOUS VALID│
        │   PACKET TO AUDIO    │
        │      DETECTOR        │
        └─────────────────────┘
                 │
              ╱──────╲         NO    ┌──────────────┐      ┌─────────────────────────┐
  S32    ◁  AUDIO SIGNAL ? ▷──────── │ DETECT SIGNAL│ ───▶ │ SELECT ERROR CONCEALMENT│ ──▶ ( RETURN )
              ╲──────╱              │    POWER     │      │ METHOD FROM NON-VOICE   │
                 │ YES              └──────────────┘      │     LIST (TABLE 2)       │
                 │                      S33               └─────────────────────────┘
        ┌─────────────────────┐                           S34
        │   GET THRESHOLD T    │
  S35   │  DENOTING CURRENT    │
        │  USABLE RESOURCES    │
        │  FROM TABLES 3, 4    │
        └─────────────────────┘
                 │
        ┌─────────────────────┐
        │     GET ERROR        │
  S36   │ CONCEALMENT METHOD   │
        │   FROM TABLE 1       │
        └─────────────────────┘
                 │
            ( RETURN )
```

# Fig.8

```
    ╭─────────────────────────╮
    │  PROCESS p CONSECUTIVE  │
    │    DROPPED PACKETS      │
    ╰─────────────────────────╯
                 │
    ┌─────────────────────────┐
    │          r=0;           │
S41 │ X-n=NUMBER OF DROPPED   │
    │   PACKETS TO CONCEAL    │
    └─────────────────────────┘
                 │
    ┌─────────────────────────┐
S42 │GET LAST SELECTED ERROR │◄────┐
    │   CONCEALMENT METHOD    │     │
    └─────────────────────────┘     │
                 │                   │
    ┌─────────────────────────┐     │
    │     GET NEXT ERROR      │     │
S43 │  CONCEALMENT METHOD     │     │
    │     FROM TABLE 5;       │     │
    │         r=r+1           │     │
    └─────────────────────────┘     │
                 │                   │
              YES                    │
S44      ◇ r<x-n ? ◇────────────────┘
                 │
               NO
    ╭─────────────────╮
    │     RETURN      │
    ╰─────────────────╯
```

# Fig.9

| VALID PACKET | SUBSTITUTION PACKETS=8 | VALID PACKET |
|---|---|---|

TEMPLATE SIGNAL=
VALID PACKET PRECEDING SUBSTITUTION PACKET (VOICE SEGMENT)

## Fig.10

```
        ┌─────────────────────────────┐
        │  MUTING MODE SELECTION      │
        │         PROCESS             │
        └─────────────────────────────┘
                      │
        ┌─────────────────────────────┐
   S51  │ MULTIPLY SAMPLE SIGNALS     │  (C < 1)
        │ IN PACKET BY CONSTANT C     │
        └─────────────────────────────┘
                      │
        ┌─────────────────────────────┐
   S52  │ CALCULATE MEAN POWER        │
        │   P OF SAMPLE SIGNAL        │
        └─────────────────────────────┘
                      │
                    ╱─────╲
   S53           ╱ P<SILENCE ╲      NO
              ╱  THRESHOLD ST ? ╲────────┐
                 ╲             ╱          │
                    ╲─────╱              │
                      │ YES              │
        ┌─────────────────────────────┐  │
   S54  │   SWITCH TO MUTING MODE     │  │
        └─────────────────────────────┘  │
                      │              ┌─────────┐
                  ┌───────┐          │ RETURN  │
                  │  END  │          └─────────┘
                  └───────┘
```

# Fig.11

```
         ╭─────────────────────────────╮
         │   MERGING PROCESS WHEN      │
        ( ERROR-CONCEALED PACKETS ARE )
         │  NOT CONCEALED WITH SILENCE │
         ╰─────────────────────────────╯
                        │
      ┌─────────────────────────────────────┐
      │          MULTIPLY n SAMPLES IN      │
  S61 │    ERROR-CONCEALED SIGNAL BY n      │
      │    SAMPLES IN TEMPLATE WINDOW W1    │
      └─────────────────────────────────────┘
                        │
      ┌─────────────────────────────────────┐
      │  NORMALIZE SAMPLE SIGNALS ACQUIRED  │
  S62 │  AS RESULT TO MEAN POWER OF GOOD    │
      │     PACKET BOUNDARY SEGMENTS        │
      └─────────────────────────────────────┘
                        │
      ┌─────────────────────────────────────┐
      │      SUBSTITUTE NORMALIZED SAMPLE   │
  S63 │  SIGNALS FOR BOUNDARY SEGMENTS OF   │
      │       ERROR-CONCEALED PACKETS       │
      └─────────────────────────────────────┘
                        │
                   ╭─────────╮
                  (   END     )
                   ╰─────────╯
```

# *Fig.12*

```
┌─────────────────────────────────┐
│      MERGING PROCESS WHEN       │
│  ERROR-CONCEALED PACKETS ARE    │
│     CONCEALED WITH SILENCE      │
└─────────────────────────────────┘
                 │
                 │
┌─────────────────────────────────┐
│   NORMALIZE n SIGNALS IN TEMPLATE│
│     WINDOW W2 TO n SIGNALS IN    │
│  BOUNDARY SEGMENTS OF GOOD       │
│           PACKETS                │
└─────────────────────────────────┘
 S71
                 │
┌─────────────────────────────────┐
│   SUBSTITUTE NORMALIZED SAMPLE   │
│  SIGNALS FOR BOUNDARY SEGMENTS   │
│   OF ERROR-CONCEALED PACKETS     │
└─────────────────────────────────┘
 S72
                 │
             ┌───────┐
             │  END  │
             └───────┘
```

EP 1 458 145 A1

# Fig.13

Labels in the figure: TLLI, FBL, LBI, 58, 57, 56, 53, 54, 55, $B\_L(max)$, $B\_L$, $B\_L(n)$, $L\_I(p)$, $L\_I(max)$, $L\_I$, DELAY, 52, 51, BUFFER FRAME

| | |
|---|---|
| ▭ | PACKETS RECEIVED WITH NO ERROR |
| ▨ | ONE OR MORE PACKETS NOT RECEIVED DUE TO ERROR |
| B_L | BURST LOSS / ERROR DATA |
| L_I | INTERVAL BETWEEN CONSECUTIVE LOSS / ERROR DATA |

EP 1 458 145 A1

## Fig.14

70

71 | 72 | 73 | 74

NETWORK → | AUDIO PACKET RECEIVER UNIT | → | AUDIO PACKET DECODING UNIT | → | ERROR CONCEALMENT SELECTION MODULE | → | AUDIO OUTPUT UNIT | → SPEAKER

## INTERNATIONAL SEARCH REPORT

| International application No. |
| --- |
| PCT/JP02/11905 |

**A. CLASSIFICATION OF SUBJECT MATTER**
Int.Cl$^7$ H04L12/56, G10L19/00, H04L1/00

According to International Patent Classification (IPC) or to both national classification and IPC

**B. FIELDS SEARCHED**

Minimum documentation searched (classification system followed by classification symbols)
Int.Cl$^7$ H04L12/56, G10L19/00, H04L1/00, H04B14/04

Documentation searched other than minimum documentation to the extent that such documents are included in the fields searched

| | | | |
| --- | --- | --- | --- |
| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | EP 986283 A2 (Mitsubishi Denki Kabushiki Kaisha), 15 March, 2000 (15.03.00), | 1,3-7,9, 11-15 |
| Y | Par. Nos. [0030] to [0034], [0042] to [0046] | 8,16 |
| A | & JP 2000-83050 A Par. Nos. [0019] to [0023], [0031] to [0034] & CA 2279752 A1 | 2,10 |
| Y | JP 2001-228896 A (Iwatsu Electric Co., Ltd.), 24 August, 2001 (24.08.01), Par. No. [0004] (Family: none) | 8,16 |
| A | JP 2001-94981 A (Toshiba Corp.), 06 April, 2001 (06.04.01), Par. No. [0042] (Family: none) | 2,10 |

| ☒ Further documents are listed in the continuation of Box C. | ☐ See patent family annex. |
| --- | --- |

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 29 January, 2003 (29.01.03) | 12 February, 2003 (12.02.03) |

| Name and mailing address of the ISA/ | Authorized officer |
| --- | --- |
| Japanese Patent Office | |
| Facsimile No. | Telephone No. |

Form PCT/ISA/210 (second sheet) (July 1998)

| | **INTERNATIONAL SEARCH REPORT** | International application No.<br>PCT/JP02/11905 |
|---|---|---|

**C (Continuation).    DOCUMENTS CONSIDERED TO BE RELEVANT**

| Category* | Citation of document, with indication, where appropriate, of the relevant passages | Relevant to claim No. |
|---|---|---|
| A | WO 00/70772 A1  (Omnipoint Corp.),<br>23 November, 2000 (23.11.00),<br>Claim 1<br>& JP 2003-500886 A<br>Claim 1<br>& US 6314535 B1          & AU 200048295 A | 1-16 |